# EUROPEAN PATENT SPECIFICATION

(11) **EP 1 820 346 B1**
(45) Date of publication and mention of the grant of the patent: **19.11.2008**
(21) Application number: 05826692.5
(22) Date of filing: 30.11.2005
(51) Int. Cl.: H04N 7/16

(54) **CUSTOMIZING COMMERCIALS**
ANPASSUNG VON WERBUNG
PERSONNALISATION DE MESSAGES PUBLICITAIRES

(30) Priority: 01.12.2004 US 632139 P
(43) Date of publication of application: 22.08.2007
(73) Proprietor: Pace Plc, Saltaire Shipley West Yorkshire BD18 3LF (GB)
(72) Inventor: VERHAEGH, Wilhelmus, F.J., NL-5621 BA Eindhoven (NL); GUTTA, Srinivas, NL-5621 BA Eindhoven (NL); MEULEMAN, Petrus, G., NL-5621 BA Eindhoven (NL)
(74) Representative: Wood, Graham
(86) International application number: PCT/IB2005/053978
(87) International publication number: WO 2006/059289

(56) References cited:
- WO-A-01/33848
- US-B1- 6 698 020

## Description

The present invention relates generally to aligning or customizing the appearance and sound of commercials or advertisements with the surrounding program, image or content.

Advertisers are generally concerned with the loss of viewers or audience when an advertisement or commercial begins during a program intermission. Conventionally, advertising or commercials are inserted into the television, radio or other immediate programming based on the general demographic statistics about the audience. In recent years, greater attention has been paid to customizing commercials based on information available about the viewer or about local conditions. For example, Sitnik (U.S. Patent No. 6,160,570) discloses a system in which an editing module is connected to a television unit, which selects one of alternate images for display based on a user profile saved earlier, the user profile including demographic information about the user. In this way, a commercial is selected for display or playback based on the user profile saved in the system.

Also, the content of the commercial may be adapted or customized to a user based on data archived about the user's past behavior.

However, the relationship of the appearance or "look and feel" of the commercial to the programming or content to which it is inserted is generally not taken into account by the cited prior art. For example, if the viewer is watching a romantic movie, and during the commercial break the commercial that is shown has particularly loud music or a saturated color scheme, it may take some time for the viewer's ears and eyes to get adjusted to such a commercial. Such commercials may strike the viewer as burdensome or annoying, which could lead to viewer discomfort, or may cause the viewer to switch the channel, fast forward or skip, or turn away from the commercial or programming.

A method and system for customizing an advertisement based on a surrounding broadcast, are provided, including an advertisement detector that detects a start of a new advertisement; a characteristic data extractor that extracts as advertisement characteristic data at least one of a video characteristic and an audio characteristic for the new advertisement and, as surrounding broadcast data, the video characteristic and the audio characteristic of the surrounding broadcast; a comparator that selects, as a replacement advertisement, one of the new advertisement and a stored advertisement based on a comparison of the surrounding broadcast data with advertisement characteristic data of the new advertisement and of the stored advertisement; and a customizing module that customizes, based on the surrounding broadcast data, at least one of the video characteristic and the audio characteristic of the replacement advertisement.

Further, the customizing module of the advertisement customizer may customize by selecting from one of at least two preset feature data for the replacement advertisement. The preset feature data may represents a color scheme, an audio track or the like.

The advertisement customizer can customize by adjusting an advertisement setting. The advertisement setting adjusted may include at least one of a volume, a pitch, a color saturation, a color contrast, a texture, or a motion.

The advertisement customizer may also customize the replacement advertisement for example, by use of liner fading, interpolation, or a dissolve. Also, the customization of the replacement advertisement may be based on information about the surrounding broadcast data, including at least one of genre information and electronic program guide information.

The replacement advertisement may be inserted into the surrounding broadcast after the advertisement is customized. Further, the replacement advertisement may be stored, for example, in a personal video recorder or a recording medium of a personal video recorder.

Selection of the replacement advertisement can be performed such that the advertisement characteristic data of the replacement advertisement matches most closely the surrounding broadcast data.

Figure 1 is a schematic of an advertisement customizer according to an embodiment of the present invention.

Figure 2 is a flowchart of an operation of an advertisement customizer according to an embodiment of the present invention.

The figures and the detailed description are to be considered as an illustrative explanation of aspects of the invention, but should not be construed to limit the scope of the invention.

This invention is applicable to various types of devices, therefore, without limiting the applicability of the invention to televisions and other monitors, the invention will be described with reference to televisions and other monitors for displaying video and/or images, and to personal video recorders and other such devices, using commercials in a broadcast television program as an example. However, it will be appreciated that the devices of the present invention can also customize advertisements from an audio broadcast or audio stream, such as audio from radio tuners and advertisement broadcast thereon. Furthermore, although the invention is described below with regard to a "broadcast" data stream, those skilled in the art will appreciate that this is by way of example only and does not limit the invention thereto. For example, the invention is equally applicable to streaming video and/or audio content, which can be viewed or played via the Internet using a broadband network, as well as to content broadcast over the world wide web, or streamed live over the Internet or recorded, stored and played back at a later time.

The video and audio input signals can be from any source known in the art, such as cable, broadcast television, satellite, or an external source such as a tuner, VCR, DVD, or set-top box. The video and audio input signals can be broadcast signals or streaming video, such as from the Internet. The input signal contains both program content portions and original commercial portions. For example, when the advertisement customizer is used in a television environment, the program portion would be a television broadcast, such as a sporting events, a television show, a movie or the like. The commercial portion can be one or more advertisements for products and/or services, political or public advertisements or announcements, and the like.

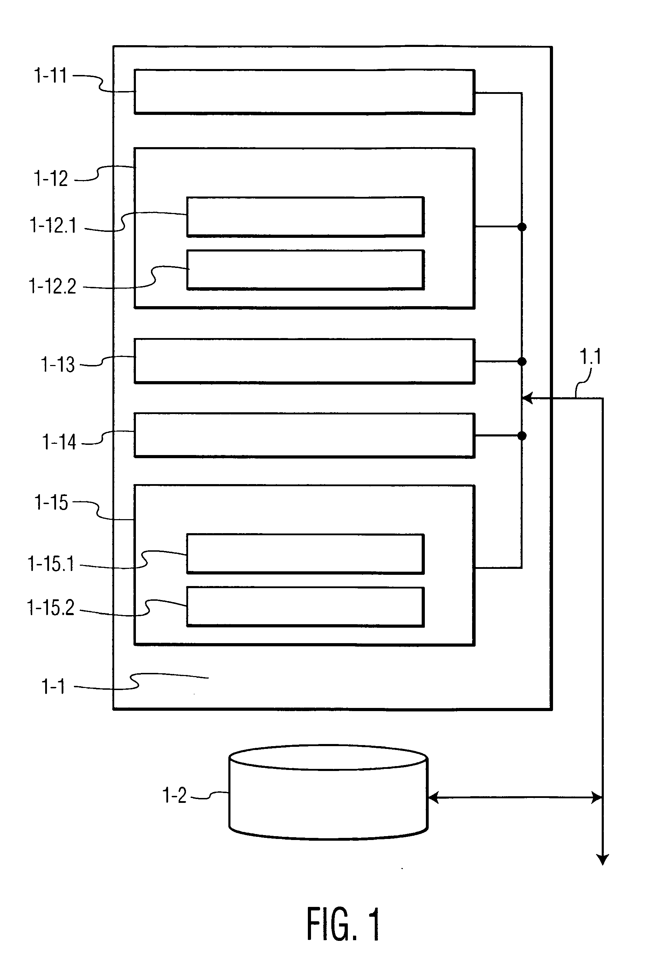

Advertisement customizer 1-1 shown in Fig. 1 is operatively connected via Bus 1.1 to a storage device 1-2 for storing programs, surrounding broadcast data, advertisements, advertisement characteristic information, settings, and/or program instructions. Although a single storage device 1-2 will be discussed herein, the same may be implemented in several separate storage devices that may be of several different types of storage devices known in the art. The storage device 1-2 may be a personal video recorder, a hard drive, a personal computer, a DVD, TiVo, CD, or other device or system that stores programs, such as television broadcasts, and/or advertisements. Controller 1-14 directs flow of control, provides for interacting with users/other devices and for other functions, and/or provides overall control of the advertisement customizer 1-1.

For example, the storage device 1-2 may store commercials in a separate physical or logical area from the recorded content (for example, the television programs recorded). According to an aspect of the present invention, advertisements received are stored keyed by product category and/or advertiser, with associated advertisement characteristic data, as will be explained below. Accordingly, advertisements can then be retrieved from the storage area based on the associated advertisement characteristic data.

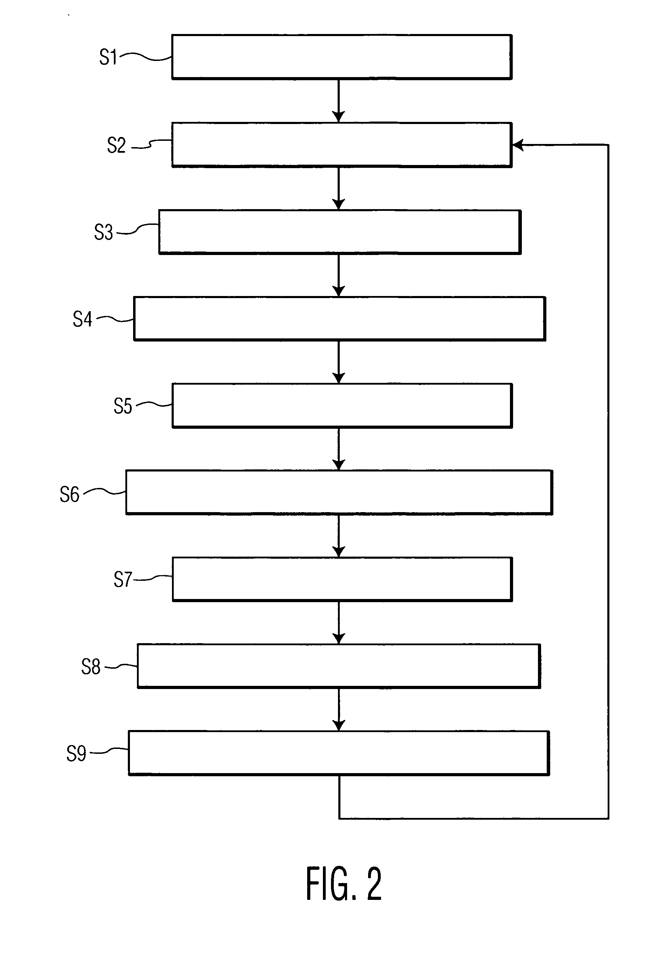

An operation according to an aspect of the present invention will now be described with reference to Figures 1 and 2. At S1 shown in Figure 2, a program, such as a broadcast signal, is received. For example, if the advertisement customizer 1-1 according to the present invention is physically integrated, or logically connected to a television set and a personal video recorder, then a television broadcast program signal may be received by the advertisement customizer according to the present invention. In a similar vein, if a television program is being recorded on a personal video recorder, then the broadcast signal may be received as the program is being played or recorded. At S2, the beginning of an advertisement or commercial in the program is detected by advertisement detector 1.11. There are several known methods of detecting the start of an advertisement, and for the sake of brevity such methods will not be discussed at length herein.

As shown in Figure 2, at S3, surrounding broadcast data is extracted from the broadcast. Such broadcast data may include information about the volume, pitch, color saturation, contrast, including color contrast, color scheme, or the like, and EPG (electronic program guide) information, by a characteristic data extractor 1-12 shown in Figure 1. As shown in Figure 1, the characteristic data extractor 1-12 may extract both video data characteristics (the video characteristics extractor 1-12.1) and audio characteristics (audio characteristic extractor 1-12.2) of the surrounding broadcast. Such broadcast characteristic data may also include object description information, texture information, genre information, and audio music tempo information about the surrounding broadcast. The surrounding broadcast may be sampled and the broadcast data extracted at the point in the broadcast immediately before the advertisement, after the advertisement, or both.

Similar characteristic data is extracted at S4 for the new advertisement that has been detected. S5 will be explained below.

Stored advertisements are then searched to find advertisements with characteristic data similar to the broadcast data of the surrounding broadcast. For example, advertisements that have been previously stored in a personal video recorder may be searched to find the advertisement of the same advertiser for the same product, whose characteristic data most closely matches the broadcasting data of the surrounding broadcast.

According to an aspect of the present invention, characteristic data for each advertisement is stored with the advertisement or in the database associated with the database where the advertisements are stored, and thus the comparison and retrieval process at the time of the selection of the replacement advertisement is facilitated. For example, at the time that the new advertisement is detected, the characteristic data for the advertisement may be extracted and stored in the characteristic data area of the database, and associated with the advertisement. It will be appreciated, that such a characteristic data database may be physically integrated with the database or data storage area, such as the personal video recorder discussed above, on which the advertisements are stored. The characteristic data may also be stored separately on a hard drive for faster retrieval and matching or may be stored remotely such as on a remote storage via a network, such as for example, the internet. Accordingly, when suitable characteristic data is found based on the surrounding broadcast data, the associated advertisement is selected from the advertisement database or storage as the replacement advertisement. According to an aspect of the present invention, a separate characteristic database, an advertisement database and a program storage are provided. However, it will be understood that these databases may be configured as separate areas of the same physical storage device 1-2, and that two or all three of the foregoing may be integrated.

At S7, the advertisement whose characteristic data matches most closely to the surrounding broadcast data is selected as the replacement advertisement. Any combination of the above examples of characteristics data could be used to select a replacement advertisement and to determine which features of the replacement advertisement need to be customized. Such features of the characteristic data could also be given a rating, for example on a "loudness, brightness" scale, and such features of the characteristic data could then be used as a basis for comparison with similarly rated surrounding broadcast data features. Furthermore, each of the characteristics can be assigned a different weighing factor so that some characteristics could be weighed more or less than others. Such weighing factors can be provided by the system by default, be assigned by the viewer through a suitable user interface, or some of the weighing factors can be provided by default and others by assigned by the viewer. Moreover, in selecting the replacement advertisement, the length of the replacement advertisement may be kept track of, such that the new advertisement that was detected is replaced with a replacement advertisement of a similar time span. For example, according to such an embodiment, a 30 second advertisement is selected as the replacement advertisement if the original advertisement is 30 seconds in duration.

At S8, customization of the replacement advertisement is performed. As shown in Figure 1, customizing module 1.15 has both a preset feature selector 1-15.1 and a setting adjuster 1.15.2 to customize the replacement advertisement. According to an aspect of the present invention, an advertisement would have alternative preset features stored with the advertisement, such as alternative audio tracks, and/or alternative color schemes. Accordingly, based on the surrounding broadcast data, the audio track and/or color scheme that comes closest to those of the surrounding broadcast data would be selected for the customized replacement advertisement. According to an embodiment of the present invention, a default selection, such as a default audio track for the advertisement would be set for the advertisement and selected by advertisement customizer 1-1 in the absence of some other customization selection made by the customizing module 1-15.

Further, the replacement advertisement would be further customized by the adjusting of the replacement advertisement's volume, pitch, color saturation, color contrast, texture, motion or the like to align it with similar features of the surrounding broadcast. It will be appreciated that the advertisement customizer 1-1 could include a video characteristics customizer (not shown) and an audio characteristics customizer (not shown) to accomplish the preset feature selection and the adjustment of the settings. In customizing the advertisement, liner fading, interpolation, or a dissolve may also be used to align it with surrounding broadcast data, based for example on the genre detected from the program's EPG data. For example, a dissolve transition may be more appropriate to a romantic movie or to certain other types of programs.

According to an aspect of the present invention, an action and adventure television program with bright colors and a loud audio track would warrant a replacement advertisement with a similar color scheme and a similar audio track. On the other hand, a romance movie could typically have softer tones and score, which would call for customized replacement commercials with similar tones and score. According to an aspect of the present invention, as discussed, the alignment of the replacement advertisement with the surrounding broadcast would be accomplished by customizing a suitable advertisement.

The customized replacement advertisement is then inserted at S9 into the surrounding broadcast and played to a user or stored for later use. In the personal video recorder embodiment, the program with the inserted replacement advertisement that has been customized would be stored in the video recorder for later playback. In a real-time embodiment, the program with the customized advertisement would be shown immediately.

According to an aspect of the present invention, a transition between the advertisement and the program could be determined by the user. Such user-specified transitions could determine what kind of transitions such as fades, dissolves, or the like, et cetera would be introduced between the actual program and the advertisement. Such preferences could also be stored for the user by the system according to the present invention.

Returning to S5, according to an aspect of the present invention, in a real-time embodiment, the advertisement characteristics data for the new advertisement detected would be compared with the surrounding broadcast data that had been extracted from the surrounding broadcast to determine what feature of the advertisement needed to be customized. Accordingly, S6 and S7 would be omitted in this embodiment, since it would always be the new advertisement detected that would be customized and played in real time with the surrounding program. That is, according to this embodiment, the detected advertisement would be customized to align its characteristic data more closely with the surrounding broadcast data of the surrounding program using the preset feature selector 1-15.1 and the setting adjuster 1-15.2 shown in Figure 1, but there would be no selection of a replacement advertisement.

Alternatively, even in the real-time embodiment, the characteristic data for storage advertisements would be compared to the surrounding broadcast data to determine the replacement advertisement. That is, a replacement advertisement could still be selected in the real-time embodiment from the stored advertisements based on the previously stored characteristic data.

With the customized replacement advertisement inserted, the advertisement customizer 1-1 would determine if additional video/audio input signal is detected, and if so, as shown in Figure 2, the system continues to monitor for the beginning of a new advertisement in the programming (return to S2). If not, then the system terminates operation.

Embodiments of the present invention provided in the foregoing written description are intended merely as illustrative examples. It will be understood however, that the scope of the invention is provided in the claims.

## Claims

1. A method of customizing an advertisement based on a surrounding broadcast, comprising:
detecting (S3) a start of a new advertisement;
extracting as advertisement characteristic data (S4) at least one of a video characteristic and an audio characteristic of the new advertisement and, as surrounding broadcast data, (S3) the video characteristic and the audio characteristic of the surrounding broadcast;
selecting (S7), as a replacement advertisement, one of the new advertisement and a stored advertisement based on a comparison (S6) of the surrounding broadcast data with advertisement characteristic of the new advertisement and of the stored advertisement; and
customizing (S8), based on the surrounding broadcast data, at least one of the video characteristic and the audio characteristic of the replacement advertisement.

2. The method of claim 1, wherein the customizing is performed by selecting from one of at least two preset feature data for the replacement advertisement, the preset feature data representing at least one of a color scheme and an audio track.

3. The method of claim 1, wherein the customizing is performed by adjusting an advertisement setting, the advertisement setting being at least one of a volume, a pitch, a color saturation, a color contrast, a texture, and a motion.

4. The method of claim 1, wherein the replacement advertisement is customized by at least one of liner fading, interpolation, and a dissolve.

5. The method of claim 1, wherein the replacement advertisement is customized based on information about the surrounding broadcast data, including at least one of genre information and electronic program guide information.

6. The method of claim 1, wherein the replacement advertisement is stored in one of a storage device (1-2) and a recording medium, and inserted into the surrounding broadcast after the advertisement is customized.

7. The method of claim 1, wherein the selecting of the replacement advertisement is performed such that the advertisement characteristic data of the replacement advertisement matches most closely the surrounding broadcast data.

8. The method of claim 1, wherein the stored advertisement selected is of a similar time span as the new advertisement.

9. The method of claim 8, wherein the stored advertisement is selected from a commercial database.

10. A system for customizing an advertisement based on a surrounding broadcast, comprising:
an advertisement detector (1-11) configured to detect a start of a new advertisement;
a characteristic data extractor (1-12) configured to extract as advertisement characteristic data at least one of a video characteristic and an audio characteristic for the new advertisement and, as surrounding broadcast data, the video characteristic and the audio characteristic of the surrounding broadcast;
a comparator (1-13) configured to select, as a replacement advertisement, one of the new advertisement and a stored advertisement based on a comparison of the surrounding broadcast data with advertisement characteristic data of the new advertisement and of the stored advertisement; and
an customizing module (1-15) configured to customize, based on the surrounding broadcast data, at least one of the video characteristic and the audio characteristic of the replacement advertisement.

11. The system of claim 10, wherein said customizing module (1-15) is configured to customize by selecting from one of at least two preset feature data for the replacement advertisement.

12. The system of claim 11, wherein the preset feature data represents at least one of a color scheme and an audio track.

13. The system of claim 10, wherein said customizing module is configured to customize by adjusting an advertisement setting.

14. The system of claim 13, wherein the advertisement setting adjusted is at least one of a volume, a pitch, a color saturation, a color contrast, a texture, and a motion.

15. The system of claim 10, wherein said customizing module is configured to customize the replacement advertisement by at least one of liner fading, interpolation, and a dissolve according to a user-specified transition instruction.

16. The system of claim 10, wherein said customizing module is configured to customize the replacement advertisement based on information about the surrounding broadcast data, including at least one of genre information and electronic program guide information.

17. The system of claim 10, wherein said customizing module is configured to insert the replacement advertisement into the surrounding broadcast after the advertisement is customized.

18. The system of claim 10, wherein said customizing module is configured to store the replacement advertisement in one of a storage device (1-2) and a recording medium of a personal video recorder.

19. The system of claim 10, wherein said advertisement customizer is configured to select the replacement advertisement such that the advertisement characteristic data of the replacement advertisement matches most closely the surrounding broadcast data.

## Patentansprüche

1. Verfahren zum Anpassen einer Werbung an ein umgebendes Broadcast, das die folgenden Schritte beinhaltet:
Erfassen (S3) des Beginns einer neuen Werbung,
Ausziehen, als werbungscharakteristische Daten, einer Videocharakterstik und/oder einer Audiocharakteristik der neuen Werbung und, als Umgebungsbroadcastdaten (S3), die Videocharakteristik und die Audiocharakteristik des umgebenden Broadcast;
Auswählen (S7), als Ersatzwerbung, entweder der neuen Werbung oder einer gespeicherten Werbung auf der Basis eines Vergleichs (S6) der Umgebungsbroadcastdaten mit Werbungscharakteristiken der neuen Werbung und der gespeicherten Werbung; und
Anpassen (S8), auf der Basis der Umgebungsbroadcastdaten, der Videocharakteristik und/oder der Audiocharakteristik der Ersatzwerbung.

2. Verfahren nach Anspruch 1, wobei die Anpassung erfolgt, indem aus einer von wenigstens zwei voreingestellten Merkmalsinformationen für die Ersatzwerbung die voreingestellten Merkmalsinformationen ausgewählt werden, die ein Farbschema und/oder einen Audio-Track repräsentieren.

3. Verfahren nach Anspruch 1, wobei die Anpassung durch Justieren einer Werbungseinstellung erfolgt, wobei die Werbungseinstellung eine Lautstärke, eine Tonhöhe, eine Farbsättigung, ein Farbkontrast, eine Textur und/oder eine Bewegung ist.

4. Verfahren nach Anspruch 1, wobei die Ersatzwerbung durch Liner-Fading, Interpolation und/oder ein Dissolve angepasst wird.

5. Verfahren nach Anspruch 1, wobei die Ersatzwerbung auf der Basis von Informationen über die Umgebungsbroadcastdaten einschließlich Genre-Informationen und/oder elektronischer Programmführungsinformationen angepasst wird.

6. Verfahren nach Anspruch 1, wobei die Ersatzwerbung in einem Speichergerät (1-2) oder auf einem Aufzeichnungsmedium gespeichert und nach dem Anpassen in das umgebende Broadcast eingeführt wird.

7. Verfahren nach Anspruch 1, wobei die Auswahl der Ersatzwerbung so erfolgt, dass die werbungscharakteristischen Daten der Ersatzwerbung am nächsten mit den Umgebungsbroadcastdaten übereinstimmen.

8. Verfahren nach Anspruch 1, wobei die ausgewählte gespeicherte Werbung eine ähnliche Zeit überspannt wie die neue Werbung.

9. Verfahren nach Anspruch 1, wobei die gespeicherte Werbung aus einer kommerziellen Datenbank ausgewählt wird.

10. System zum Anpassen einer Werbung auf der Basis eines umgebenden Broadcast, das Folgendes umfasst:
einen Werbungsdetektor (1-11), der zum Erkennen des Beginns einer neuen Werbung konfiguriert ist;
einen Charakteristische-Daten-Extraktor (1-12), der so konfiguriert ist, dass er als werbungscharakteristische Daten eine Videocharakteristik und/oder eine Audiocharakteristik für die neue Werbung und als Umgebungsbroadcastdaten die Videocharakteristik und die Audiocharakteristik des Umgebungsbroadcast auszieht;
einen Komparator (1-13), der so konfiguriert ist, dass er als Ersatzwerbung die neue Werbung oder eine gespeicherte Werbung auf der Basis eines Vergleichs der Umgebungsbroadcastdaten mit werbungscharakteristischen Daten der neuen Werbung und der gespeicherten Werbung auswählt; und
ein Anpassungsmodul (1-15), das so konfiguriert ist, dass es die Videocharakteristik und/oder die Audiocharakteristik der Ersatzwerbung auf der Basis der Umgebungsbroadcastdaten anpasst.

11. System nach Anspruch 10, wobei das genannte Anpassungsmodul (1-15) so konfiguriert ist, dass es durch Auswählen aus einer von wenigstens zwei voreingestellten Merkmalsinformationen für die Ersatzwerbung anpasst.

12. System nach Anspruch 11, wobei die voreingestellten Merkmalsinformationen ein Farbschema und/oder einen Audio-Track repräsentieren.

13. System nach Anspruch 10, wobei das genannte Anpassungsmodul so konfiguriert ist, dass es durch Justieren einer Werbungseinstellung anpasst.

14. System nach Anspruch 13, wobei die justierte Werbungseinstellung eine Lautstärke, eine Tonhöhe, eine Farbsättigung, ein Farbkontrast, eine Textur und/oder eine Bewegung ist.

15. System nach Anspruch 10, wobei das genannte Anpassungsmodul so konfiguriert ist, dass es die Ersatzwerbung durch Liner-Fading, Interpolation und/oder ein Dissolve gemäß einem vom Benutzer vorgegebenen Übergangsbefehl anpasst.

16. System nach Anspruch 10, wobei das genannte Anpassungsmodul so konfiguriert ist, dass es die Ersatzwerbung auf der Basis von Informationen über die Umgebungsbroadcastdaten einschließlich Genre-Informationen und/oder elektronischer Programmführungsinformationen anpasst.

17. System nach Anspruch 10, wobei das genannte Anpassungsmodul so konfiguriert ist, dass es die Ersatzwerbung nach dem Anpassen der Werbung in das Umgebungsbroadcast einführt.

18. System nach Anspruch 10, wobei das genannte Anpassungsmodul so konfiguriert ist, dass es die Ersatzwerbung in einem Speichergerät (1-2) oder einem Aufzeichnungsmedium eines Personal Videorecorders speichert.

19. System nach Anspruch 10, wobei die genannte Werbungsanpassungsvorrichtung so konfiguriert ist, dass sie die Ersatzwerbung so auswählt, dass die werbungscharakteristischen Daten der Ersatzwerbung am nächsten mit den Umgebungsbroadcastdaten übereinstimmen.

## Revendications

1. Procédé pour personnaliser une publicité fondée sur une télédiffusion accompagnante comprenant les opérations consistant à :
détecter (S3) un début d'une nouvelle publicité ;
extraire, à titre de données caractéristiques de la publicité (S4), au moins l'un des éléments suivants, à savoir une caractéristique vidéo et une caractéristique audio de la nouvelle publicité et, à titre de données de la télédiffusion accompagnante (S3), la caractéristique vidéo et la caractéristique audio de la télédiffusion accompagnante ;
sélectionner (S7), à titre de publicité de remplacement, soit la nouvelle publicité soit une publicité stockée, sur la base d'une comparaison (S6) des données de la télédiffusion accompagnante avec les caractéristiques publicitaires de la nouvelle publicité et de la publicité stockée ; et
personnaliser (S8), sur la base des données de la télédiffusion accompagnante, l'un au moins des éléments suivants, à savoir la caractéristique vidéo et la caractéristique audio de la publicité de remplacement.

2. Procédé selon la revendication 1, la personnalisation étant effectuée à la suite de la sélection à partir de l'une d'au moins deux données de propriétés prédéfinies pour la publicité de remplacement, alors que les données de propriétés prédéfinies représentent au moins l'un des éléments suivants, à savoir une combinaison de couleurs et une piste audio.

3. Procédé selon la revendication 1, la personnalisation étant effectuée à la suite du réglage d'un paramètre de la publicité, alors que le paramètre de la publicité est au moins l'un des éléments suivants, à savoir le volume, la hauteur tonale, la saturation des couleurs, le contraste des couleurs, la texture et le mouvement.

4. Procédé selon la revendication 1, la publicité de remplacement étant personnalisée par l'un au moins des éléments suivants, à savoir Liner Fading (évanouissement du message), Interpolation et Dissolve (fondu enchaîné).

5. Procédé selon la revendication 1, la publicité de remplacement étant personnalisée sur la base des informations concernant les données de la télédiffusion accompagnante, comprenant au moins l'un des éléments suivants, à savoir les informations de genre et les informations du guide électronique des programmes.

6. Procédé selon la revendication 1, la publicité de remplacement étant stockée soit dans un dispositif de stockage (1-2) soit sur un support d'enregistrement, et insérée dans la télédiffusion accompagnante une fois que la publicité est personnalisée.

7. Procédé selon la revendication 1, la sélection de la publicité de remplacement étant effectuée de sorte que les données publicitaires caractéristiques de la publicité de remplacement présentent une concordance optimale avec les données de la télédiffusion accompagnante.

8. Procédé selon la revendication 1, la publicité stockée qui a été sélectionnée ayant un intervalle de temps similaire à celui de la nouvelle publicité.

9. Procédé selon la revendication 8, la publicité stockée étant sélectionnée à partir d'une base de données commerciale.

10. Système permettant de personnaliser une publicité sur la base d'une télédiffusion accompagnante, comprenant :
un détecteur de publicités (1-11) lequel est configuré pour détecter le début d'une nouvelle publicité ;
un extracteur (1-12) de données caractéristiques lequel est configuré pour extraire, à titre de données caractéristiques de la publicité, au moins l'un des éléments suivants, à savoir une caractéristique vidéo et une caractéristique audio pour la nouvelle publicité et, à titre de données de la télédiffusion accompagnante, la caractéristique vidéo et la caractéristique audio de la télédiffusion accompagnante ;
un comparateur (1-13) lequel est configuré pour sélectionner, à titre de publicité de remplacement, soit la nouvelle publicité soit une publicité stockée, sur la base d'une comparaison des données de la télédiffusion accompagnante avec les caractéristiques publicitaires de la nouvelle publicité et de la publicité stockée ; et
un module de personnalisation (1-15) lequel est configuré pour personnaliser, sur la base des données de la télédiffusion accompagnante, l'un au moins des éléments suivants, à savoir la caractéristique vidéo et la caractéristique audio de la publicité de remplacement.

11. Système selon la revendication 10, ledit module de personnalisation (1-15) étant configuré pour effectuer la personnalisation à la suite de la sélection à partir de l'une d'au moins deux données de propriétés prédéfinies pour la publicité de remplacement,

12. Système selon la revendication 11, les données de propriétés prédéfinies représentant au moins l'un des éléments suivants, à savoir une combinaison de couleurs et une piste audio.

13. Système selon la revendication 10, ledit module de personnalisation étant configuré pour effectuer la personnalisation à la suite du réglage d'un paramètre de la publicité.

14. Système selon la revendication 13, le paramètre de la publicité qui est réglé étant au moins l'un des éléments suivants, à savoir le volume, la hauteur tonale, la saturation des couleurs, le contraste des couleurs, la texture et le mouvement.

15. Système selon la revendication 10, ledit module de personnalisation étant configuré pour effectuer la personnalisation de la publicité de remplacement grâce à l'un au moins des éléments suivants, à savoir Liner Fading (évanouissement du message), Interpolation et Dissolve (fondu enchaîné), selon des instructions de transition spécifiées par un utilisateur.

16. Système selon la revendication 10, ledit module de personnalisation étant configuré pour effectuer la personnalisation de la publicité de remplacement sur la base des informations concernant les données de la télédiffusion accompagnante, comprenant au moins l'un des éléments suivants, à savoir les informations de genre et les informations du guide électronique des programmes.

17. Système selon la revendication 10, ledit module de personnalisation étant configuré pour insérer la publicité de remplacement dans la télédiffusion accompagnante une fois que la publicité est personnalisée.

18. Système selon la revendication 10, ledit module de personnalisation étant configuré pour stocker la publicité de remplacement soit dans un dispositif de stockage (1-2) soit sur un support d'enregistrement d'un magnétoscope.

19. Système selon la revendication 10, ledit dispositif de personnalisation de publicités étant configuré pour sélectionner la publicité de remplacement de sorte que les données publicitaires caractéristiques de la publicité de remplacement présentent une concordance optimale avec les données de la télédiffusion accompagnante.
